# EUROPEAN PATENT APPLICATION

(11) **EP 2 009 864 A1**
(43) Date of publication of application: **31.12.2008**
(21) Application number: 07111301.3
(22) Date of filing: 28.06.2007
(51) Int. Cl.: H04L 29/06

(54) **Method and apparatus for attack prevention**

(71) Applicant: Nibelung Security Systems GmbH, 80638 Munich (DE)
(72) Inventor: Wittmann, Thomas, 84419, Schwindegg (DE); Dessauer, Ulrich, 82110, Germering (DE)
(74) Representative: Betten & Resch

(57) **Abstract**

A method for protecting a computer from an attack over the internet, said method comprising:
monitoring the incoming data traffic reaching said computer;
for a certain internet connection between said computer and another computer accessing said computer, filtering the content of the incoming data traffic and searching said content for a rule based matching pattern which is an indication for a connection representing an attack;
counting the number of times which within a certain time period the rule-based matching pattern has been fulfilled in the incoming data of a certain IP connection;
if the counted valued exceeds a certain threshold, blocking the IP address from which the IP connection originates.

## Description

### FIELD OF THE INVENTION

The present invention relates to a method and an apparatus for attack prevention.

### BACKGROUND OF THE INVENTION

Content-based threats from the internet are significant threats to nowadays computer security. Services like "Telnet" or "HTTP", "SMTP" or "SSH" can be compromised by attacks from the internet. Threats which can become relevant are for example so-called "brute force attacks" or "dictionary attacks" which, for example, through illegal e-mail address search can be used for a dictionary harvesting attack.

Other typical threats are so-called denial of service attacks, distributed denial of service attacks or distributed reflected denial of service attacks. These types of attacks will now be briefly explained.

A "brute force attack" (BFA) or "dictionary attack" (DA) is an attempt of an attacker to get into possession of unknown information.

An attacker may for example try to get access data to a specific service like HTTP, TELNET, SSHD, etc. or a part of such a service (for example authentication under HTTP). Thereby the attacker uses a known (or widely used) user name (e.g. guest or administrator) and starts a "brute force attack" or "dictionary attack" to determine the unknown password. Thereby he just uses a trial and error method to get the password.

With a harvesting attack an attacker tries to get valid information related to a service or a system. An example is the so-called "directory harvesting attack" also known as "e-mail address harvesting". Here the attacker tries with the brute force attack/dictionary attack to determine valid e-mail addresses to use them for criminal purposes (sales, spam, etc.). A more concrete example will now be explained with respect to the simple mail transfer protocol (SMTP). A classical brute force attack as "directory harvesting attack" would look as follows. An attacker establishes a plurality of connections to a mail server (mail transfer agent). In order to determine valid e-mail addresses the attacker proceeds sequentially. He pretends to deliver an e-mail to a recipient of the system:
aa@agnitas.de
is for example his first attack. If this is an invalid email address, the server returns the following message:
550 <aa@agnitas.de>: recipient address rejected: user unknown in virtual alias table.

The error code "550" indicates that this user does not exist. The attacker proceeds with his attempts, for example the sequence code looks as follows:
ab@agnitas.de
ac@agnitas.de
tw@agnitas.de

For example tw@agnitas.de may be a valid e-mail address. The server confirms this with a corresponding message: 250Ok.

The so determined e-mail address is stored at the attacker's computer so that it may for example be used in a spam mailing.

In a similar manner valid e-mail addresses can also be determined by using entries in a dictionary which then is called dictionary attack. The attacker may for example use combinations of the entries in the dictionary as e-mail aliases and try to send e-mails to the thus composed email-addresses. In the similar manner as above thereby valid e-mail addresses can be determined.

This type of attack where information like valid e-mail addresses is determined is called harvesting attack.

Another type of attack is the so-called "denial of service" (DoS). With DoS an attacker attempts to crash the attacked system by corrupted requests or by the sheer number of requests. Such attacks which are executed by a plurality of attackers synchronously are called distributed denial of service (DDoS).

For example a group of attackers may plan to attack the web server of a company (like for example an online auction company) in order to prevent its customers from accessing it. Let us assume that a server is equipped for a maximum of 70,000 accesses per minute. The attackers plan to carry out about 100,000 accesses per minute, and thereby they reduce the chance that a regular customer can access the service to 1:100,000.

A relatively new attack is the "distributed reflected denial of service". Instead of directly accessing the service the attackers carry out accesses to big web sites, however, by manipulation of the TCP header they pretend the target of attack to be the originator of the request. As a result the targeted system is literally flooded by TCP requests from these web sites, this also is a denial of service.

The aforementioned attacks are nowadays a significant security problem in computer networks. Therefore attempts have been made to protect the systems from such kinds of attacks.

The classical way of protection is the so-called connection-based solution. The "connection-based" analysis is based on a known number of attackers and a repeating scheme (on the transport and internet layer of the TCP/IP reference model).

A hypothetical example will now be explained. A group of twenty attackers plans the attack on a web server of a company (for example an online auction company) to prevent its customers from access. In the aforementioned example the chance for a successful access by a customer is 1:100,000 and thereby neglectable. Assume that this is a distributed denial of service attack with several (e.g. twenty) attackers taking part. Further assume that the attackers establish 100,000 connections per minute to the web server and thereby completely use the resources of the server so that regular users cannot connect to this server.

With the connection-based analysis for protecting against this attack it is determined which IP address in time frame n establishes overproportionally many connections to the server. The analysis would lead to the following information:
IP 1.1.1.1 - 5000 TCP-connections per minute (is classified as attacker 1)
IP 2.2.2.2. - 10 TCP-connections per minute (is classified as normal customer)
IP 3.3.3.3 - 5000 TCP-connections per minute (is classified as attacker 2)
IP 4.4.4.4 - 5000 TCP-connections per minute (is classified as attacker 3)
   ...and so on...

The connection-based analysis recognizes based on the TCP connections (internet layer) and based on the time period (e.g. one minute) which IP addresses are corresponding to attackers and which are corresponding to normal customers, because a normal customer usually will not for example access the web server more than 5,000 times per minute. Based on this information on the internet layer a blocking against the attackers (e.g. by means of a firewall) can be executed, the DDoS attack is stopped.

However, based on the massive growth rate of so-called bot networks consisting of hijacked computers the appearance of DDoS attacks changes. Assume that we have again 100,000 connections per minute, however, now distributed to 10,000 attackers. In the effect on the targeted system this attack is as effective as in the above example with only twenty attackers, however, a connection-based analysis in this example would not lead to useable results, because "friend" and "enemy" cannot be distinguished anymore. It is therefore desirable to provide a different protection method which avoids this disadvantage.

### SUMMARY OF THE INVENTION

According to one embodiment there is provided a method for protecting a computer from an attack over the internet, said method comprising:
monitoring the incoming data traffic reaching said computer;
for a certain internet connection between said computer and another computer accessing said computer, filtering the content of the incoming data traffic and searching said content for a rule based matching pattern which is an indication for a connection representing an attack;
counting the number of times which within a certain time period the rule-based matching pattern has been fulfilled in the incoming data of a certain IP connection;
if the counted valued exceeds a certain threshold, blocking the IP address from which the IP connection originates.

Rather than detecting attacks on a connection-based approach this enables a content based approach where the content of incoming data (content of incoming data other than the source IP) is analyzed as to whether this content matches with a rule-based matching pattern. Once one has identified a certain pattern of the content being indicative of an attack it is possible to define the corresponding matching criterion and a timespan and a threshold beyond which the occurrence of the matching triggers a protective action like a blocking of the originating IP address. This makes it possible to block IP addresses already based on a much lower request occurrence frequency than in the connection-based approach.

Therefore the approach is more effective and is effective even against forms of attack (like DDoS) where the previous approaches fail to the small number of requests originating from a certain IP address.

According to one embodiment the IP connection is a SMTP connection and the rule-based matching pattern is a pattern which represents an error message indicative that the intended user is unknown.

This is an implementation of a rule-based matching criterion which is suitable to detect attacks on mail servers in the form of harvesting attacks because they result in this type of error message. Normal users will not produce this error message in a frequency exceeding the threshold.

According to one embodiment the IP connection is a http-connection and the rule-based matching pattern represents a certain URL being requested without modification from the originating computer for a number of times exceeding a threshold within a certain time period.

This is an implementation of a rule-based matching criterion which is suitable to detect attacks based on http-requests because "normal users" do not use unmodified http requests repeatedly such often that the threshold is exceeded. Only automatically generated requests from an attacker follow this matching pattern and may thereby be detected.

According to one embodiment there is provided a counter for each IP address from which one or more connections to the computer to be protected are originating, and if for a certain one of said counters the threshold is exceeded the corresponding IP address is blocked.

This enables to monitor multiple connections originating from the same IP address and, if necessary, to block this IP address. It further enables the monitoring of connections from multiple different IP addresses.

According to one embodiment said threshold for a certain IP address is varied depending on how often due to a match with said matching pattern said IP address has already been blocked This enables to adapt the blocking behavior to the behavior of a certain IP address. E.g. if from a certain IP address more than one attack has originated, this may be used to trigger a decrease of the threshold value. On the other hand, if for a certain time no (further) attack has been originated from a certain IP address, the threshold may again be increased.

According to one embodiment the blocking time is a product of a fixed time period and the value of the counter which counts the occurrence of the matching pattern within the time period.

This has the effect that frequent attackers are blocked for a longer time and thereby increases the protective effect.

According to one embodiment after expiration time the blocked IP address is released but the counter is maintained at its value, and
the value of the counter is repeatedly decremented after each expiration of a certain time period within which no match with the rule-based matching pattern has been found.

This "rewards" good behavior without any attack from a certain IP address, so that a "cleaned" attacker after some time may re-access the host. Nevertheless, the keeping of the counter value reduces the threshold for an originating IP from which already once an attack originated and thereby is particularly effective.

According to one embodiment there are two counters, one being a counter which counts for a certain IP address the matches with said matching pattern during a sliding window of a certain time length, and the other counter being a total number counter counting the total number of matches with said matching pattern for a certain IP address or the total number of how often for a certain IP address a blocking had already been performed. In this way the absolute number of attacks or agreements with the matching pattern from a certain IP address may be taken into account to adjust parameters of the method like the blocking time or the threshold for the determination of a request being an attack. Again, good behavior may be rewarded by increasing the threshold and decreasing the blocking time and bad behavior may be punished by decreasing the threshold and increasing the blocking time.

According to one embodiment there is provided an apparatus for protecting a computer from an attack over the internet, said apparatus comprising:
a module for monitoring the incoming data traffic reaching said computer;
a module for filtering for a certain internet connection between said computer and another computer accessing said computer the content of the incoming data traffic and for searching said content for a rule based matching pattern which is an indication for a connection representing an attack;
counting the number of times which within a certain time period the rule-based matching pattern has been fulfilled in the incoming data of a certain IP connection;
if the counted valued exceeds a certain threshold, blocking the IP address from which the IP connection originates.

This provides an apparatus which implements the method according to an embodiment of the invention

According to one embodiment there is provided a computer program comprising computer executable program code which wen being executed on a computer enables said computer to execute a method according to one of claims 1 to 5.

### DESCRIPTION OF THE DRAWINGS

Fig. 1 schematically illustrates an environment in which an embodiment of the invention may be used.
Fig. 2 schematically illustrates the configuration of an apparatus according to an embodiment of the invention.

### DETAILED DESCRIPTION

In the following embodiments of the present invention will be described.

According to one embodiment, instead of the number of connections per IP address in a certain time period n there is analyzed the content of the connection request. For a "true customer" this may for example look like the following:
http://www.online-auction.de
http://www.online-auction.de/overview/
http://www.online-auction.de/overview/tv-sets

The behavior of an attacker like a bot computer from a bot network, however, is different as follows:
HTTP://www.online-auction.de
HTTP://www.online-auction.de
HTTP://www.online-auction.de

This means that the requests from the attacker are static and are based on continuously repeated URLs. By means of content-based analysis of the data packets between a client (an IP address in the internet) and the web server this information can be retrieved. If for example a request from a certain IP address is directed to always the same URL, one can determine on content-based analysis that this IP address is blocked, for example after the fifth attempt. According to one embodiment the blocking may be carried out for a certain time period for example one minute, so that from the blocked IP address no connection can be established to the web server.

In other words, a "rule-based matching pattern" is defined which represents the content which has a high likelihood of belonging to an attack. The rule in this case is "repeated URL without modification" and the matching pattern is any URL on the accessed host which is repeated numerous times without being modified. Since this is not a typical behavior of a "normal user" but rather the behavior of an attacker, it may be used as a matching criterion.
According to one embodiment this may be implemented as follows. There are provided n pattern buffers, where e.g. in one embodiment n is 3. Each buffer has a corresponding counter and a corresponding timestamp indicating the time when the data stored in the buffer was received. Initially all buffers are empty. The buffers in one embodiment are filled as follows.:
1.) A newly received pattern is compared with the patterns already stored in the buffers. If this pattern exists already in one of the buffers, the corresponding counter is incremented and the timestamp value is set to the actual time.
2.) If the pattern does not exist yet in any of the buffers, it is checked whether there is still an empty buffer which is not yet occupied. In this case the pattern is stored in this buffer, the counter is set to 1 and the timestamp is set to the actual time.
3.) If the pattern does not exist yet in any of the buffers, and if further all buffers are occupied already, there is chosen the buffer which has the oldest timestamp value. The pattern of this buffer is then reset and overwritten with the new pattern, the counter is reset to 1 and the timestamp value is set to the actual time (or the time at which the pattern was received).

Such a buffer control method may be referred to as "last modified last out".

If the value of one of the counters reaches a defined threshold value (e.g. 10 or any other value), it is judged that the corresponding pattern represents an attack.

According to one embodiment there is defined one or more "whitelists" containing patterns which are excluded from being recognized or from triggering the conclusion that an attack is taking place.

According to one embodiment those patterns which have exceeded the threshold are stored globally. If then e.g. they have occurred during multiple connections the threshold may be reduced. E.g. if a certain pattern has occurred during multiple connections (e.g. 20) within a certain time (e.g. 5 minutes)m the threshold for this pattern is decremented (e.g. by 1). This may be done until a minimum value for the threshold (e.g. 5) is reached. Similarly, those patterns may be removed from the global storage after the pattern has not showed up any more for some time. This can be done in such a manner that the threshold is incremented again step by step (always after a certain time has passed without the pattern having occurred again) until the pattern is then finally removed from this "global pattern storage".

If the attacker and the repeated sequence of requests appears again after this time period, according to one embodiment the blocking can be extended, for example to five minutes, and so forth.

The content-based system thereby recognizes the attacker is independent of the number of connections which are carried out within a certain time period.

According to a further embodiment the content-based analysis may for example comprise the "learning" of typical attacking patterns,

According to one embodiment such a learning mechanism may be implemented as follows. For identifying an attack pattern such a pattern has to occur a number of times which exceeds an "initial threshold", e.g. by requiring that it occurs ten times in sequence for identifying it as an attack pattern If this pattern then occurs again, the threshold for identifying this pattern to be an attack may be decreased, e.g. to nine. If it then occurs further the threshold may be further decreased, according to one embodiment to a minimum threshold which may be arbitrarily chosen, which according to one embodiment should not be smaller than two since otherwise this pattern would be blocked even for a "honest user".

In this manner a "set of patterns" can be learned as being likely an attack pattern, and the knowledge about the thus learned pattern may be represented by storing for each of these learned patterns a corresponding "threshold" which as described before depends on how often this patern has already been considered to be used for an attack.

According to a further embodiment the "signature" of the web browser which may be comprised in the content can be used. The signature identifies the type of the browser (e.g. Internet Explorer or Firefox), and if the signature does not contain a known type of webbrowser, this may be considered to be an indication for the request being part of an attack.

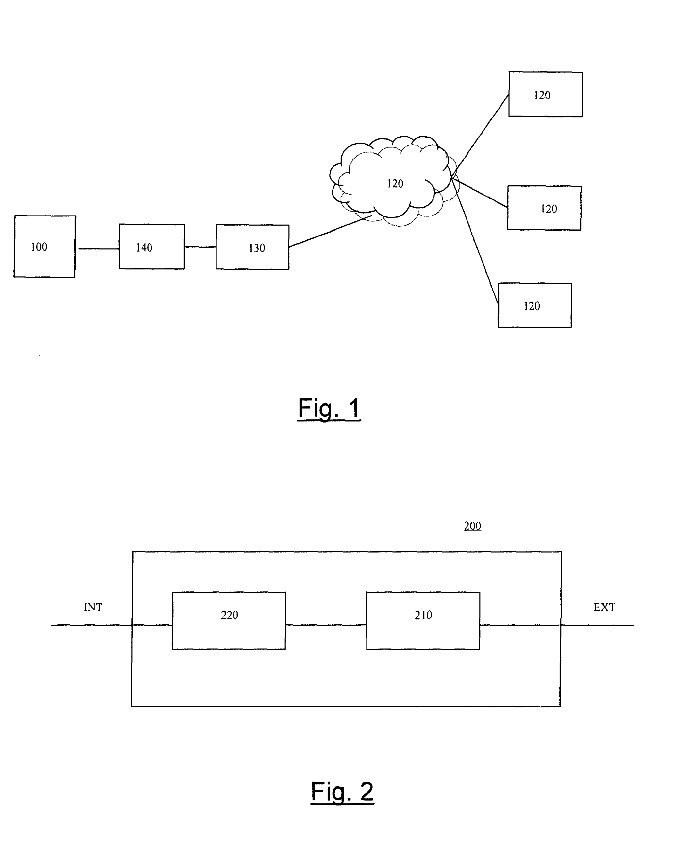

An embodiment will now be described in connection with Fig. 1. Fig 1 shows a computer 100 which is e.g. a server offering some service like mail transmission or any webservice and which can be accessed from the outside, e.g. through the internet 110 by other computers 120 which are requesting a service from computer 100. The connection to the internet may be achieved by router 130. Between router 130 and the computer 100 there may now be connected an apparatus 140 implementing an embodiment of the invention. The "filtering apparatus" 140 checks the data transmission and if a certain criterion is met block requests from the outside. This will be described in the following in somewhat more detail.

A configuration of filtering apparatus is schematically illustrated in Fig. 2. The apparatus 200 has an external connection EXT to the router and an internal connection INT to the computer 100. Between both the apparatus implements a "transparent bridge" which is not visible to the outside. Ingoing data is received by a listener 210 (which may e.g. be implemented by the library LIBCAP) The apparatus itself has no valid IP-address on these networks and is therefore not attackable.

If it recognizes data belonging to a protocol which should be protected (e.g. the SMTP protocol) there is triggered a content analysis which is carried out by module 220. If the content analysis leads to the conclusion that the content meets a certain criterion, there is triggered a corresponding action, e.g. the incrementation of a counter. If the counter then reaches a threshold this may lead to a blocking of the originating IP address of the traffic by module 2220 or a separate module like a firewall. Thereby the targeted computer 100 becomes invisible for the attacker

As long as the criterion which leads to the blocking of the originating IP address has not been met the incoming data is not blocked but forwarded to the internal interface INT by module 220. Moreover, as long as the incoming data does not meet a certain "triggering criterion" (e.g. the incoming data belonging to the SMTP protocol or any other protocol for which filtering should be performed) the module 220 may not be triggered to perform the filtering and may just forward the incoming data to the interface INT.

In the following the operation of module 210 according to one embodiment which triggers the filtering function will be described in somewhat more detail.

The module 210 monitors the complete data traffic passing the bridge. As mentioned for implementing it the module LIBCAP contained in OpenBSD may be used. Thereby the ethernet frames are extracted from the traffic. Then it will be decomposed. At first the internet protocol IP packet contained therein is extracted. From this packet one can retrieve the following information:
- Protocol (TCP/UDP)
- Source IP-Address
- Destination IP-Address

Depending on the protocol in the next step the TCP or UDP packet is extracted from the IP packet. From this packet one can retrieve the following information:
- Source Port
- Destination Port
- Flags (Control Bits)

Through the "flags" contained therein the status of an IP connection may be determined. One may distinguish e. g. between:
i) new connections
ii) existing connections
iii) terminated connections

Finally for each ethernet frame (or for each IP packet) the following information are available:
- Protocol: (TCP, UDP)
- Source IP-Address
- Source Port
- Destination IP-Address
- Destination Port
- Status (NEW, ESTABLISHED, FIN)

This data is then compared with the protection criterion of the module 210 and if a match is detected the module 220 is "triggered" to carry out its protective operation for the incoming data. Such a triggering criterion may be provided for different protocols like SMTP, HTTP, FTP or other protocols for which the computer 100 should be protected from attacks. Therefore module 210 may check the incoming traffic for multiple criteria (e.g. SMTP and HTTP criteria) and may if a match is detected trigger a "protective mode" for module 220 to be performed.

According to one embodiment the trigger criterion for a SMTP protection may look as follows:
- Protocol: TCP
- Source IP-Address: external
- Source Port: *
- Destination IP-Address: internal
- Destination Port: 25
- Status: NEW

This means that a trigger is executed if
... an external client (Source IP-Address: external, Source Port: *) establishes
... to the SMTP service (Protocol: TCP, Destination Port: 25)
... of an internal server (Destination IP-Address: internal),
... a new connection (Status: NEW)

Once the trigger has been executed the module 220 enters the "protective mode". The traffic of the triggering connection is then according to one embodiment completely recorded. The connection according to TCP/IP is a connection from one endpoint to the other. One of these endpoints is represented by the parameters:
- *Source IP-Address*
- *Source Port*
an the other one by the parameters:
- *Destination IP-Address*
- *Destination Port*

The connection may be represented by:
[endpoint 1 ] [endpoint 2]
[Source IP-Address] <=connection=> [Destination IP-Address]
[Source Port ] [Destination Port]
Module 220 in its protective mode (which may also be according to one embodiment the default mode) monitors and records the complete data traffic of such a connection until its end which e.g. occurs through the flag FIN or a timeout.

From the records module 220 can conclude the direction of the traffic. As an example: A client with IP address 1.2.3.4. establishes from port 33202 a connection to computer 100 (which is to be protected) having the IP address 5.5.5.5. to port 25 (i.e. TCP as SMTP). For the initial request this client sends a packet with SYNC to the computer 100 /the "server"):
(TCP) (IN) 1.2.3.4:33202 --> 5.5.5.5:25
This direction (from the internet) may be referred to as incoming (IN).
Then the server responds:
(TCP) (OUT) 5.5.5.5:25 --> 1.2.3.4:33202
The direction from the server may be referred to as outgoing (OUT).
The establishment of a classical connection may then look as follows:
[Data 1] (TCP) (IN) 1.2.3.4:33202 --> 5.5.5.5:25 [initialization of the connection]
[Data 2] (TCP) (OUT) 5.5.5.5:25 --> 1.2.3.4:33202 [communication Server->Client]
[Data 3] (TCP) (IN) 1.2.3.4:33202 --> 5.5.5.5:25 [communication Client->Server]
[Data 4] (TCP) (OUT) 5.5.5.5:25 --> 1.2.3.4:33202 [communication Server->Client] ...and so on...
[Data n] (TCP) (OUT) 5.5.5.5:25 --> 1.2.3.4:33202 [terminate the connection]
Therefrom one may take the following information:
- Direction (IN, OUT)
- Data (data blocks of the communication)
For the traffic which has been "decomposed" in this manner an analysis of the traffic based on its content may be performed.

According to one embodiment the above "decomposition" and also the analysis of the content is performed in real-time, i. e. without delaying the data traffic, at least without significantly delaying it.

In one embodiment the incoming traffic is the with respect to its content analyzed based on one or more rules. Such a rule may e.g. consist of one or more matching patterns for which it is checked whether the content of the traffic matched with this pattern. According to one embodiment the analysis is carried out "connection based" which means it is carried out for a specific socket pair of a certain connection, typically a connection which has triggered the analysis by the trigger condition above.

The pattern for which module 220 searches then may e.g. according to one embodiment look as follows:
Match Pattern: "550*user unknown*"
Direction: outgoing

These parameters of the matching pattern define that data blocks labeled "outgoing" should be searched for the term string 550*user unknown*. This is indicative of a harvesting attack if it is performed repeatedly.

The character * here is a wildcard which may stand for any arbitrary string.

If a positive match is found, a counter may be incremented. The counter may be specific for the IP connection being watched (consisting of source IP, source port, and destination IP and destination port, i.e. a certain socket pair). A separate counter may be maintained for each IP connection which is being watched. In other words, if multiple IP connections have fulfilled the trigger criterion they may all be watched and for each of them there may be maintained a counter which is incremented if the matching pattern in this IP connection's traffic has been found.

The module 220 acting in the protective mode may further have defined a "threshold criterion" which may consist e.g. in a threshold for the counter. The threshold criterion may e.g. look like as follows:
Number of Tries: 3 per Source IP-Address
Timespan: 60s

This determines that after the matching pattern has been found three times within a time period of 60 seconds (which may be a sliding window) a certain action is to be taken for protecting the target.
According to one embodiment the trigger condition which decides whether a certain connection is to be watched is decided specific for each connection, i.e. specific for a set of source and destination address, source and destination port, and protocol (e.g. TCP or UDP). The counter and the threshold based on which it is decided whether an IP address is to be blocked, however, according to one embodiment is specific for the IP address and not for the socket pair. In other words, in this embodiment there is a counter (and a threshold) for each source IP address, and multiple connections originating from this source IP address may contribute to incrementing the counter and thereby reaching the threshold so that the IP address then is blocked, e.g. if the aforementioned criterion
Number of Tries: 3 per Source IP-Address
Timespan: 60s
Is fulfilled for a certain IP address.

Now the action which is taken once the threshold has been reached will be explained. According to one embodiment this may be any action which protects the targeted host 100, and one example would be to block the originating IP address e.g. as follows:
Action: DROP Source IP
Duration: 120s * Number of Tries

This has the following effect. Through packet filtering (PF) at the input EXT of the transparent bridge 140 a blocking (Policy:DROP) of the involved source IP address is performed. According to one embodiment this blocking is carried out for a certain time period, e.g. 120 seconds. According to one embodiment the blocked time period is based on a basic time period (here 120 seconds) times the number of times by which within the timespan (in this embodiment 60 s) the pattern was found. This has the affect that particularly aggressive attackers having a high request frequency are blocked a longer time.

From the point of view of the attacker this makes the targeted host invisible.

According to one embodiment the blocked connection is admitted again once the "blocking time" (here 360 s) has passed. This means that the system removes the blocking of the involved source IP address.

According to one embodiment, however, there is a further counter which counts the "total number of tries", not only the ones within the sliding window "timespan" (here 60 seconds). While after the release of the blocking the counter which counts the tries within the sliding window is reset to zero, the counter which counts the "total number of tries" remains unchanged.

If then again there is attempted another attack (3 further tries within 60 seconds) the total number counter reaches 6. This means that with the next protective action the blocking time for which the blocking of this IP address is carried out is 6*120=720 seconds.

In this manner frequent attackers are blocked for increasing time periods which makes the system more stable against particularly frequent attackers.

According to one embodiment there is a mechanism which drives a "release" of blocked IP addresses if they do not continue their attack. This mechanism comprises a counter which e.g. within every fixed interval e.g. 120s decreases e.g. the "total number counter" by a fixed number, e.g. by 1. This has the effect that the large blocking time caused by a high "total number counter" is decreased over time if the attacking IP address carries out no further attacks.

According to one embodiment there are not two counters, a total number counter and a "sliding window counter" like in the example before, but just one counter which in fact is the total number counter. Once this counter reaches the threshold the originating IP address is blocked for the blocking time. After the blocking time has expired the IP address is released again and may access the host again. However, the counter is not reduced. Since the value of the counter has reached the threshold, however, the IP address in fact is still blocked. Due to the release scheduler, however, after some fixed time the counter may be reduced e.g. by one (in the example before from 3 to 2), and then the threshold is not reached anymore so that the blocking is not carried out anymore. However, a single attack within the time frame "timespan" may again cause the counter to again reach the threshold. In this manner the "good behavior" over time is rewarded, and a "bad attacker" may quickly reach the threshold and may be blocked again. In this embodiment the blocking time also may be based on a product of a fixed time and the value of the counter.

According to one embodiment the counter is not increased further once the threshold has been reached, or at least the counter is not incremented beyond a certain threshold (which may be different from the one triggering the protective action).

The present in invention has been described by means of illustrative embodiments. The skilled person will readily recognize that modifications can be made within the basic mechanism described herein. E.g. the described mechanism may be applied for the protection from any type of requests in any protocols. It is just necessary to define a suitable matching pattern and a corresponding timing criterion, i.e. a threshold beyond which the occurrence of the matching pattern, e.g, within a certain timespan, will be interpreted as an attack and trigger a protective action.

It will be understood by the skilled person that the embodiments described hereinbefore may be implemented by hardware, by software, or by a combination of software and hardware. The modules and functions described in connection with embodiments of the invention may be as a whole or in part implemented by microprocessors or computers which are suitably programmed such as to act in accordance with the methods explained in connection with embodiments of the invention.

## Claims

1. A method for protecting a computer from an attack over the internet, said method comprising:
monitoring the incoming data traffic reaching said computer;
for a certain internet connection between said computer and another computer accessing said computer, filtering the content of the incoming data traffic and searching said content for a rule based matching pattern which is an indication for a connection representing an attack;
counting the number of times which within a certain time period the rule-based matching pattern has been fulfilled in the incoming data of a certain IP connection;
if the counted valued exceeds a certain threshold, blocking the IP address from which the IP connection originates.

2. The method of claim 1, wherein the IP connection is a SMTP connection and the rule-based matching pattern is a pattern which represents an error message indicative that the intended user is unknown, and/or
wherein the IP connection is a http-connection and the rule-based matching pattern represents a certain URL being requested without modification from the originating computer for a number of times exceeding a threshold within a certain time period.

3. The method of claim 1 or 2, wherein
there is provided a counter for each IP address from which one or more connections to the computer to be protected are originating, and
if for a certain one of said counters the threshold is exceeded the corresponding IP address is blocked.

4. The method of one of the preceding claims wherein said threshold for a certain IP address is varied depending on how often due to a match with said matching pattern said IP address has already been blocked.

5. The method of one of claims 1 to 4, wherein
the blocking time for which an IP address is blocked is a product of a fixed time period and the value of the counter which counts the occurrence of the matching pattern within the time period.

6. The method of one of claims 1 to 5, wherein
after expiration time the blocked IP address is released but the counter is maintained at its value, and
the value of the counter is repeatedly decremented after each expiration of a certain time period within which no match with the rule-based matching pattern has been found.

7. The method of one of claims 1 to 6, wherein there are two counters, one being a counter which counts for a certain IP address the matches with said matching pattern during a sliding window of a certain time length, and the other counter being a total number counter counting the total number of matches with said matching pattern for a certain IP address or the total number of how often for a certain IP address a blocking had already been performed.

8. The method of claim 7, wherein
depending on the number of said total number counter value said blocking time and/or said threshold value are adjusted.

9. An apparatus for protecting a computer from an attack over the internet, said apparatus comprising:
a module for monitoring the incoming data traffic reaching said computer;
a module for filtering for a certain internet connection between said computer and another computer accessing said computer the content of the incoming data traffic and for searching said content for a rule based matching pattern which is an indication for a connection representing an attack;
counting the number of times which within a certain time period the rule-based matching pattern has been fulfilled in the incoming data of a certain IP connection;
if the counted valued exceeds a certain threshold, blocking the IP address from which the IP connection originates.

10. The apparatus of claim 9, further comprising
a module for implementing any of the methods of one of claims 2 to 8.

11. A computer program comprising computer executable program code which when being executed on a computer enables said computer to execute a method according to one of claims 1 to 8.
